# EUROPÄISCHE PATENTSCHRIFT

(11) **EP 3 191 781 B1**
(45) Veröffentlichungstag und Bekanntmachung des Hinweises auf die Patenterteilung: **05.09.2018**
(21) Anmeldenummer: 15767106.6
(22) Anmeldetag: 08.09.2015
(51) Int. Cl.: F27B 17/02, B01L 7/00, H05B 3/64

(54) **HEIZHAUBENVORRICHTUNG MIT NEUARTIGER ANORDNUNG DER HEIZEINRICHTUNG UND VERFAHREN ZUM BETREIBEN EINER HEIZHAUBENVORRICHTUNG**
HEATING HOOD APPARATUS HAVING A NOVEL TYPE OF THE HEATING DEVICE AND METHOD OF USING SUCH A HEATING HOOD
CHAUFFE-BALLON AVEC NOUVEL AGENCEMENT DU DISPOSITIF CHAUFFANT ET PROCÉDÉ D'UTILISATION D'UN DISPOSITIF AVEC NOUVEL AGENCEMENT

(30) Priorität: 08.09.2014 DE 202014007322 U
(43) Veröffentlichungstag der Anmeldung: 19.07.2017
(73) Patentinhaber: Innovative ThermoAnalytic Instruments KG, 67310 Hettenleidelheim (DE)
(72) Erfinder: ALLES, Andrea, 67310 Hettenleidelheim (DE); STUART, Keith, Canvey Island Essex SS8 OBT (GB)
(74) Vertreter: Ascherl, Andreas
(86) Internationale Anmeldenummer: PCT/EP2015/070446
(87) Internationale Veröffentlichungsnummer: WO 2016/038005

(56) Entgegenhaltungen:
- DE-U1- 9 104 442

## Beschreibung

Die vorliegende Erfindung liegt gemäß Anspruch 1 auf dem Gebiet der Heizhauben. Heizhauben werden in verschiedenen technischen Bereichen, insbesondere der Pharma-, Chemie- und Metallrecyclingindustrie verwendet, um z.B. chemische und biologische Reaktionen oder Destillationsverfahren zu realisieren.

Bekannte Heizhauben, wie sie z.B. aus der DE 91 04 442.1 U1 bekannt sind, weisen stets das Problem auf, dass die Wärmeeinbringung in die zu erhitzende Substanz nicht gleichmäßig erfolgt. Ferner führt die Wärmeerzeugung dazu, dass sich jeweils die gesamte Heizhaube sehr stark erhitzt, wodurch für den Untergrund, auf dem die Heizhaube aufsteht, eine größere Beschädigungsgefahr besteht oder wodurch für die Verwender, die mit der Außenseite der Heizhaube in Kontakt kommen können, eine hohe Verletzungsgefahr besteht.
Es ist somit die Aufgabe der vorliegenden Erfindung eine Heizhaube bereitzustellen, die in einem Wärmeübertragungsbereich eine gleichmäßige Erwärmung der zu temperierenden Substanz ermöglicht und dabei die äußeren Gehäuseanteile eine geringere Erwärmung erfahren.

Die zuvor genannte Aufgabe wird erfindungsgemäß durch eine Heizhaube gemäß Anspruch 1 gelöst.

Die vorliegende Erfindung bezieht sich auf eine Heizhaube, die mindestens einen sphärisch ausgebildeten Wärmeübertragungsbereich, insbesondere zur Aufnahme von zumindest teilweise kugelförmigen Objekten, eine Rahmeneinrichtung, wobei die Position des Wärmeübertragungsbereichs durch die Rahmeneinrichtung zumindest teilweise vorgegeben wird, und eine Heizeinrichtung, umfasst. Die Heizeinrichtung ist zwischen dem Wärmeübertragungsbereich und der Rahmeneinrichtung angeordnet, wobei zwischen der Rahmeneinrichtung und der Heizeinrichtung zumindest abschnittsweise ein Schlitz zum Führen von Luft ausgebildet ist, wobei Luft einerseits der Wandungseinrichtung und der Rahmeneinrichtung in den Schlitz einleitbar ist, wobei die eingeleitete Luft auf einer in Längsrichtung der Rahmeneinrichtung bzw. in zur Umfangsrichtung des Wärmeübertragungsbereichs orthogonaler Richtung beabstandeten zweiten Seite aus dem Schlitz ausleitbar ist. Die Luft wird somit besonders bevorzugt in einem unteren Bereich der Heizhaube in die Heizhaube hineingelassen oder hineingefördert oder eingesaugt. Ferner wird die Luft in einem oberen Bereich der Heizhaube aus der Heizhaube herausgelassen oder herausgefördert oder herausgeleitet. Diese Lösung ist vorteilhaft, da die durch die Heizhaube geleitete Luft zum einen eine isolierende Funktion erfüllt, wodurch weniger der durch die Heizeinrichtung erzeugten Wärme auf die Rahmeneinrichtung übergeht. Ferner fördert die bevorzugt kaminartig bewegte Luft Wärme aus der Heizhaube heraus. Es ist hierbei denkbar, dass eine Gebläseeinrichtung, insbesondere eine elektrisch betriebene Gebläseeinrichtung, zum Fördern der Luft in oder an der Heizhaube vorgesehen ist. Durch den "Kamin-Effekt" ist die Rahmeneinrichtung bzw. das Gehäuse der Heizhaube bevorzugt auch während einer Anwendung z.B. bis 450°C, 500°C, 550°C oder 600°C von außen verletzungsfrei berührbar, wodurch eine hohe Arbeitssicherheit gewährleistet wird.
Weitere bevorzugte Ausführungsformen sind Gegenstand der nachfolgenden Beschreibung oder der Unteransprüche.
Gemäß einer bevorzugten Ausführungsform der vorliegenden Erfindung umschließt die Heizeinrichtung zumindest einmal und bevorzugt mehrfach den Wärmeübertragungsbereich in Umfangsrichtung rohrförmig. Bevorzugt umschließt die Heizeinrichtung den Wärmeübertragungsbereich, insbesondere spiralförmig, genau, mindestens oder höchstens 2 mal, genau, mindestens oder höchstens 3 mal, genau, mindestens oder höchstens 4 mal, genau, mindestens oder höchstens 5 mal, genau, mindestens oder höchstens 6 mal, genau, mindestens oder höchstens 7 mal, genau, mindestens oder höchstens 8 mal, genau, mindestens oder höchstens 9 mal, genau, mindestens oder höchstens 10 mal, genau, mindestens oder höchstens 11 mal, genau, mindestens oder höchstens 12 mal, genau, mindestens oder höchstens 13 mal, genau, mindestens oder höchstens 14 mal, genau, mindestens oder höchstens 15 mal, genau, mindestens oder höchstens 16 mal, genau, mindestens oder höchstens 17 mal, genau, mindestens oder höchstens 18 mal, genau, mindestens oder höchstens 19 mal oder besonders bevorzugt genau, mindestens oder höchstens 20 mal. Diese Ausführungsform ist vorteilhaft, da durch die den Wärmeübertragungsbereich umschließende Heizeinrichtung eine sehr gleichmäßige Temperierung des Wärmeübertragungsbereichs erfolgt bzw. möglich ist.

Im Inneren der rohrförmigen Heizeinrichtung erstreckt sich gemäß einer weiteren bevorzugten Ausführungsform der vorliegenden Erfindung zumindest abschnittsweise und bevorzugt über die gesamte Länge des rohrförmigen Anteils der Heizeinrichtung ein elektrischer Heizwiderstand, wobei der elektrische Heizwiderstand mittels eines Füllmaterials, insbesondere Siliziumdioxid, von der die rohrförmige Gestalt ausbildenden Wandung der Heizeinrichtung beabstandet ist. Bevorzugt ist somit in der zumindest abschnittsweise rohrförmigen Heizeinrichtung zumindest abschnittsweise, insbesondere in dem rohrförmigen Anteil, ein Füllmaterial vorgesehen, durch das der elektrische Heizwiderstand von der Wandung der Heizeinrichtung beabstandet ist. Das Füllmaterial ist hierbei bevorzugt Siliziumdioxid oder weist bevorzugt Siliziumdioxid auf. Besonders bevorzugt besteht das Füllmaterial mehrheitlich, insbesondere mengen- und/oder massenmäßig, aus Siliziumdioxid.

Gemäß einer weiteren bevorzugten Ausführungsform der vorliegenden Erfindung erstreckt sich der elektrische Heizwiderstand in einem Zwischenabschnitt zwischen einem Frontabschnitt und einem Endabschnitt der rohrförmigen Heizeinrichtung, wobei der Endabschnitt und/oder der Frontabschnitt bevorzugt derart gestaltet sind, dass in einem Betriebszustand, in dem der elektrische Heizwiderstand mit Strom beaufschlagt wird, die durchschnittliche Oberflächentemperatur der rohrförmigen Einrichtung im Zwischenabschnitt größer ist als die durchschnittliche Oberflächentemperatur der rohrförmigen Einrichtung im Frontabschnitt und/oder im Endabschnitt. Diese Ausführungsform ist vorteilhaft, da der Frontabschnitt und der Endabschnitt durch ihre niedrigere Betriebstemperatur einfacher mit einer weiteren Einrichtung, insbesondere einer Steuereinrichtung, verbunden werden können.

Die Heizeinrichtung ist gemäß einer weiteren bevorzugten Ausführungsform der vorliegenden Erfindung mit einer manuell betätigbaren Steuerungseinrichtung gekoppelt. Diese Ausführungsform ist vorteilhaft, da durch eine Betätigung der Steuerungseinrichtung durch den Nutzer bestimmte Temperaturen und/oder Temperaturverläufe einstallbar bzw. vorgebbar sind.

Die rohrförmige Heizeinrichtung wird gemäß einer weiteren bevorzugten Ausführungsform der vorliegenden Erfindung von einer den Wärmeübertragungsbereich zumindest abschnittsweise auskleidenden Abdeckschicht überlagert, wobei die Abdeckschicht zumindest teilweise und bevorzugt massemäßig mehrheitlich bevorzugt aus Glasfasern bzw. einer oder mehreren Glasfasermatten bzw. einer Glasfaserschicht/en und/oder einer oder mehreren Aramidfaser/n bzw. Aramidmatte/n besteht. Diese Ausführungsform ist vorteilhaft, da durch die Abdeckschicht eine Schutzschicht bereitgestellt wird, durch welche die Heizeinrichtung vor Beschädigungen geschützt wird. Ferner ist die Abdeckschicht bevorzugt mattenartig ausgebildet, wodurch ein Zusammenstoßen der Abdeckschicht mit einem in den Wärmeübertragungsbereich eingebrachten Temperierungsgegenstand gedämpft wird. Der Temperierungsgegenstand ist bevorzugt ein Glasgefäß, insbesondere ein Glaskolben, zum Erhitzen von darin vorgehaltenen Substanzen.

Die rohrförmige Heizeinrichtung wird gemäß einer weiteren bevorzugten Ausführungsform der vorliegenden Erfindung durch eine mit der Rahmeneinrichtung gekoppelte Wandungseinrichtung in Umfangsrichtung umschlossen, wobei zwischen der Wandungseinrichtung und der rohrförmigen Heizeinrichtung bevorzugt ein Mittel zum thermischen Dämmen vorgesehen ist. Das Mittel besteht hierbei bevorzugt aus einem Dämmungsmaterial zur Verhinderung oder Reduzierung eines Wärmeübertrags. Es wird so insbesondere eine Wärmeübertragung, z.B. mittels Wärmestrahlung oder Wärmeleitung, reduziert bzw. verhindert.

Die Wandungseinrichtung und die Rahmeneinrichtung sind gemäß einer weiteren bevorzugten Ausführungsform der vorliegenden Erfindung mittels mehrerer zumindest abschnittsweise thermisch isolierter Kopplungseinrichtungen miteinander verbunden, wobei zwischen der Wandungseinrichtung und der Rahmeneinrichtung zumindest abschnittsweise ein Schlitz zum Führen von Luft ausgebildet ist, wobei Luft einerseits der Wandungseinrichtung und der Rahmeneinrichtung in den Schlitz einleitbar ist, wobei die eingeleitete Luft auf einer in Längsrichtung der Wandungseinrichtung und der Rahmeneinrichtung beabstandeten zweiten Seite aus dem Schlitz ausleitbar ist. Diese Ausführungsform ist vorteilhaft, da die durch die Heizhaube geleitete Luft zum einen eine isolierende Funktion erfüllt, wodurch weniger von der durch die Heizeinrichtung erzeugten Wärme auf die Rahmeneinrichtung übergeht. Ferner fördert die bevorzugt kaminartig bewegte Luft Wärme aus der Heizhaube heraus. Es ist hierbei denkbar, dass eine Gebläseeinrichtung, insbesondere eine elektrisch betriebene Gebläseeinrichtung, zum Fördern der Luft in oder an der Heizhaube vorgesehen ist. Durch den "Kamin-Effekt" ist die Rahmeneinrichtung bzw. das Gehäuse der Heizhaube bevorzugt auch während einer Anwendung z.B. bis 450°C, 500°C oder 550°C von außen verletzungsfrei berührbar, wodurch eine hohe Arbeitssicherheit gewährleistet wird.

Die zumindest abschnittsweise thermische Isolierung der Kopplungseinrichtungen wird gemäß einer weiteren bevorzugten Ausführungsform der vorliegenden Erfindung derart im Bereich des Schlitzes angeordnet, um eine Wärmeleitungsbarriere zwischen der Rahmeneinrichtung und der Wandungseinrichtung auszubilden. Diese Ausführungsform ist vorteilhaft, da ein Aufheizen der Rahmeneinrichtung in Folge von Wärmeleitung verhindert bzw. reduziert wird.

Im Wärmeübertragungsbereich, insbesondere auf der Abdeckschicht, ist gemäß einer weiteren bevorzugten Ausführungsform der vorliegenden Erfindung Schüttgut angeordnet, das durch Schüttgutkörner gebildet wird, wobei das Schüttgut infolge einer mechanischen Belastung umpositionierbar ist. Als Schüttgut werden im Rahmen der vorliegenden Erfindung die Gesamtheit aller Festkörperpartikel bzw. -objekte verstanden, die löse in einen Aufnahmebreich hineingeschüttet werden können. Fluide werden im Rahmen der vorliegenden Erfindung explizit nicht als Schüttgut angesehen. Die Umpositionierung des Schüttguts erfolgt bevorzugt durch ein Inkontaktbringen des Schüttguts mit einem zu temperierenden Objekt, insbesondere einem Glaskörper, wie z.B. einem Reagenzglas oder einem Kolben. Diese Ausführungsform ist vorteilhaft, das Schüttgut im Vergleich zu einem Fluid nicht beginnt spontan zu spritzen, sollten unbeabsichtigt Kontaminationen des Schüttguts erfolgen. Heißes Öl hat hingegen z.B. die Eingenschaft, wenn es mit Wasser in Kontakt kommt, das Wasser so schnell aufzuheißen, dass es zu Verpuffungen des Wassers kommen kann. Beispielsweise kann sich dies beim Bruch des zu temperierenden Objekts ergeben, wodurch die im zu temperierenden Objekt vorgehaltene Flüssigkeit in das Öl fließt und dadurch unkontrolliert erhitzt wird. Die Verpuffung der unkontrolliert erhitzten Flüssigkeit kann dabei ein überschwappen des Öls bewirken, woraus eine sehr hohe Verletzungsgefahr für die Bedienperson resultiert. Das Schüttgut ist aufgrund seiner nichtfluidischen Eigenschaften und bevorzugt aufgrund einer höheren Dichte hingegen deutlich weniger schwapp- oder spritzanfällig.

Die Schüttgutkörner des Schüttguts bestehen gemäß einer weiteren bevorzugten Ausführungsform der vorliegenden Erfindung mehrheitlich aus Metall, wobei bevorzugt alle Schüttgutkörner aus Metall bestehen, wobei die Schüttgutkörner aus dem gleichen Material oder aus unterschiedlichen Materialien bestehen können. Diese Ausführungsform ist vorteilhaft, da die Schüttgutkörner aufgrund ihrer Materialeigenschaften sehr gut Wärme leiten und bevorzugt eine gegenüber Öl größere Dichte aufweisen. Die Verwendung von Metall als Schüttgutkörnermaterial hat ferner die Vorteile, dass es keine Grüche absondert und nicht brennbar ist. Ferner heizt es die zu temperierenden Objekte schneller auf als Öl.

Die Schüttgutkörner bestehen gemäß einer weiteren bevorzugten Ausführungsform aus metallischem Material, das eine Wärmeleitfähigkeit von mehr als 10 W/(m*K), insbesondere von mehr als 30 W/(m*K) oder von mehr als 50 W/(m*K) oder von mehr als 80 W/(m*K) oder von mehr als 109 W/(m*K) oder von mehr als 119 W/(m*K) oder von mehr als 150 W/(m*K) oder von mehr als 200 W/(m*K) oder von mehr als 230 W/(m*K) oder von mehr als 350 W/(m*K) oder von mehr als 400 W/(m*K) oder von mehr als 420 W/(m*K), aufweist, bevorzugt besteht das metallische Material aus einem der Metalle Eisen, Zink, Messing, Aluminium, Gold, Kupfer und/oder Silber oder weist eines oder mehrere dieser Metalle auf. Diese Ausführungsform ist vorteilhaft, da je nach Einsatzbereich die für die jeweilige Anwendung mit der Heizhaube geeignetste Materialauswahl getroffen werden kann.

Die Mehrzahl der Schüttgutkörner und bevorzugt alle Schüttgutkörner weisen gemäß einer weiteren bevorzugten Ausführungsform der vorliegenden Erfindung eine zumindest teilweise sphärische Form, insbesondere eine kugelartige Form, auf, wobei der Durchmesser der Mehrzahl der Schüttgutkörner und bevorzugt aller Schüttgutkörner bevorzugt kleiner als 6mm, insbesondere kleiner als 5mm oder kleiner als 4mm oder kleiner als 3mm oder kleiner als 2mm oder kleiner als 1mm, ist. Dies Ausführungsform ist vorteilhaft, durch bei kleineren Durchmessern die verbleiben Bereiche zwischen den einzelnen Schüttgutkörnern kleiner werden und dadurch weniger Luft in diesen Bereichen vorhanden sein kann. Da Luft einen relativ geringe Wärmeleitfähigkeit besitzt, wird bevorzugt versucht möglichst wenig Luft im Bereich zwischen dem zu temperierenden Objekt und der Abdeckschicht 24 vorzuhalten. Weiterhin bezieht sich die vorliegenden Erfindung auf ein Verfahren zum Betreiben einer Heizhaube, insbesondere gemäß einer zuvor und im nachfolgenden beschriebenen Heizhaube. Das erfindungsgemäße Verfahren umfasst bevorzugt mindestens die Schritte: Bereitstellen einer Heizhaube, Einbringen von Schüttgut in den Wärmeübertragungsberiech der Heizhaube, Positionieren eines zu temperierenden Objekts gegenüber der Heizhaube, wobei das Objekt und das Schüttgut in Kontakt gebracht werden, Temperieren des Schüttguts durch die Heizhaube und Temperieren des zu temperierenden Objekts mittels des temperierten Schüttguts.

Ferner kann sich die vorliegende Erfindung auf eine Verwendung von Schüttgut in der benaspruchten Heizhaube beziehen.
Die Verwendung der Wörter "im Wesentlichen" definiert bevorzugt in allen Fällen, in denen diese Wörter im Rahmen der vorliegenden Schutzrechtsschrift verwendet werden eine Abweichung im Bereich von 1%-30%, insbesondere von 1%-20%, insbesondere von 1%-10%, insbesondere von 1%-5%, insbesondere von 1%-2%, von der Festlegung, die ohne die Verwendung dieser Wörter gegeben wäre.
Einzelne oder alle Darstellungen der im Nachfolgenden beschriebenen Figuren sind bevorzugt als Konstruktionszeichnungen anzusehen, d.h. die sich aus der bzw. den Figuren ergebenden Abmessungen, Proportionen, Funktionszusammenhänge und/oder Anordnungen entsprechen bevorzugt genau oder bevorzugt im Wesentlichen denen der erfindungsgemäßen Vorrichtung bzw. des erfindungsgemäßen Produkts.
Weitere Vorteile, Ziele und Eigenschaften vorliegender Erfindung werden anhand nachfolgender Beschreibung anliegender Zeichnungen erläutert, in welchen beispielhaft erfindungsgemäße Heizhauben dargestellt sind. Elemente der erfindungsgemäßen Heizhauben, welche in den Figuren wenigsten im Wesentlichen hinsichtlich ihrer Funktion übereinstimmen, können hierbei mit gleichen Bezugszeichen gekennzeichnet sein, wobei diese Bauteile bzw. Elemente nicht in allen Figuren beziffert oder erläutert sein müssen. Nachfolgend wird die Erfindung rein beispielhaft anhand der beigefügten Figuren beschrieben.
Darin zeigen:
- Fig. 1: eine Querschnittsdarstellung der erfindungsgemäßen Heizhaubenvorrichtung;
- Fig. 2: eine perspektivische Ansicht einer der erfindungsgemäßen Heizhaubenvorrichtung in einer Schnittdarstellung;
- Fig. 3: eine Aufhängeeinrichtung, wie sie gemäß der erfindungsgemäßen Heizhaubenvorrichtung bevorzugt verwendet wird;
- Fig. 4: eine Explosionsdarstellung der erfindungsgemäßen Heizhaubenvorrichtung;
- Fig. 5: eine Darstellung entsprechend der Fig. 1, wobei ebenfalls eine Halteeinrichtung und ein zu erhitzendes Objekt dargestellt sind
- Fig. 6a: eine Darstellung einer erfindungsgemäßen Heizhaube, die mit Schüttgut ausgestattet ist, und
- Fig. 6b: eine weitere Darstellung einer erfindungsgemäßen Heizhaube, die mit Schüttgut ausgestattet ist, wobei mit dem Schüttgut ein zu temperierendes Objekt in Kontakt steht.

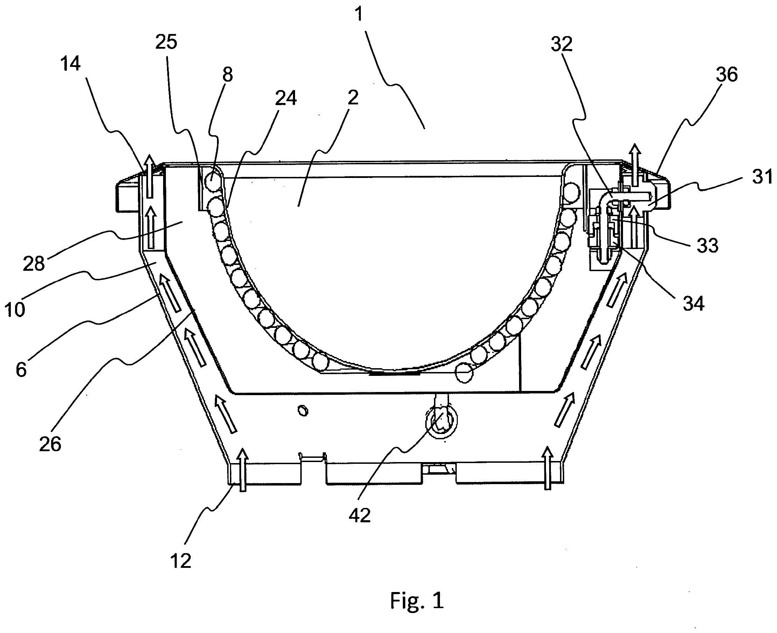

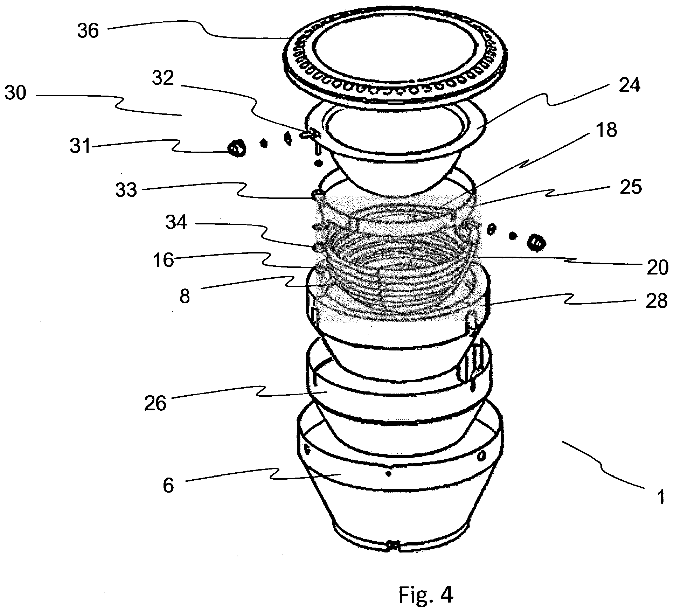

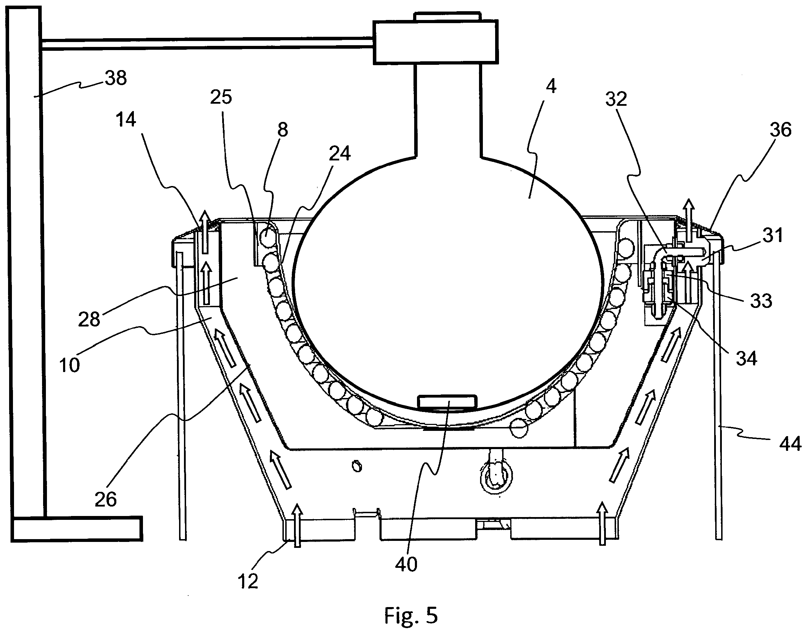

Fig. 1 zeigt ein Beispiel einer erfindungsgemäßen Heizhaubenvorrichtung 1 bzw. eine Heizhaube 1. Die Heizhaube 1 weist einen Wärmeübertragungsbereich 2 auf, in dem Objekte zur Temperierung platzierbar bzw. anordenbar sind. Der Wärmeübertragungsbereich 2 wird zumindest abschnittsweise durch eine Abdeckschicht 24 begrenzt. Die Abdeckschicht 24 ist hierbei bevorzugt ein dünnes Schichtelement, das bevorzugt zumindest teilweise aus Glasfasern und/oder aus weiteren oder alternativen Materialen besteht. Dünn beschreibt hierbei bevorzugt eine Querschnittsdicke, die geringer als 10 mm ist. Die Abdeckschicht 24 hat hierbei bevorzugt die Funktion die Heizeinrichtung 8 zu überdecken. Zusätzlich oder alternativ hat die Abdeckschicht 24 die Funktion einen Kontakt zwischen der Heizhaube und einem Objekt 4 (vgl. Fig. 5), insbesondere einem hohlen Glaskörper, zu dämpfen. Die Heizeinrichtung 8 ist bevorzugt als rohrförmige Mineralienheizung ausgeführt. Bevorzugt ist hierbei ein elektrisches Widerstandselement bzw. Heizwiderstand in einem Metallrohr angeordnet. Das Metallrohr besteht hierbei bevorzugt aus Stahl, insbesondere aus rostfreiem Edelstahl. Ferner ist in dem Rohr bevorzugt ein Füllmaterial, insbesondere Silizumdioxid, angeordnet. Beide Enden des Rohres sind besonders bevorzugt verschlossen bzw. versiegelt. Das Rohr weist hierbei bevorzugt einen Frontabschnitt 18 (vgl. Fig. 4), einen Endabschnitt 20 (vgl. Fig. 4) und einen zwischen dem Frontabschnitt 18 und dem Endabschnitt 20 angeordneten Zwischenabschnitt 16 (vgl. Fig. 4) auf. Der Endabschnitt 16 und der Frontabschnitt 18 weisen bevorzugt Leitungsverbinder auf, die mit einer Steuerungseinrichtung (nicht gezeigt) verbunden sind. Der Heizwiderstand bzw. das Heizelement erstreckt sich bevorzugt ausschließlich in dem Zwischenabschnitt 16 und somit beabstandet zu den Enden des Rohrs. Bevorzugt ist der Heizwiderstand bzw. das Heizelement genau, weniger oder mehr als 20 mm, genau, weniger oder mehr als 40 mm, genau, weniger oder mehr als 80 mm, genau, weniger oder mehr als 100 mm, genau, weniger oder mehr als 120 mm, genau, weniger oder mehr als 140 mm, genau, weniger oder mehr als 200 mm von dem jeweiligen Rohrende beabstandet, wodurch der Frontabschnitt 18 und der Endabschnitt 20 entsprechend lang ausgebildet sind. Der Frontabschnitt 18 und der Endabschnitt 20 bilden bevorzugt Anschlussbereiche aus, deren durchschnittliche Betriebstemperatur bevorzugt geringer ist als die durchschnittliche Betriebstemperatur im Zwischenabschnitt 16. Lose Anschlussenden des Frontabschnitts 18 und des Endabschnitts 20 werden bevorzugt verpresst und verschlossen bzw. versiegelt. Weiterhin ist an dem rohrförmigen Element, in dem das Füllmaterial und der Widerstand angeordnet sind, bevorzugt eine Erdungsverbindung bzw. ein Erdungskabel 42 angeordnet. Das Bezugszeichen 25 kennzeichnet ein Haltemittel zum Halten der Heizeinrichtung 8. Das Haltemittel 25 weist bevorzugt mehrere, insbesondere genau, mindestens oder höchstens 2, genau, mindestens oder höchstens 3, genau, mindestens oder höchstens 4, genau, mindestens oder höchstens 5, genau, mindestens oder höchstens 6, genau, mindestens oder höchstens 7 Isolatoren auf. Die Isolatoren bestehen hierbei bevorzugt zumindest teilweise aus einem keramischen Material. Bevorzugt sind die einzelnen Isolatoren des Haltemittels 25 als Keramikisolatoren ausgeführt. Bevorzugt sind die einzelnen Isolatoren gleichmäßig oder im Wesentlichen gleichmäßig voneinander in Umfangsrichtung des Haltemittels 25 beabstandet. Ein Isolator kann hierbei bevorzugt aus einem ersten Isolatoranteil 33 und einem zweiten Isolatoranteil 34 bestehen.

Die Heizeinrichtung 8 wird von einer Wandungseinrichtung 26 zumindest in Umfangsrichtung umschlossen. Die Wandungseinrichtung 26 dient dabei bevorzugt zur Aufnahme eines Mittels zum thermischen Dämmen 28 bzw. Füllmaterials bzw. eines Dämmungsmaterials, insbesondere Glaswolle oder Gasfasermaterial. Das Dämmungsmaterial bzw. das Mittel zum thermischen Dämmen 28 ist hierbei bevorzugt zwischen der Heizeinrichtung 8 und der Wandungseinrichtung 26 angeordnet. Die Wandungseinrichtung 26 bildet bevorzugt eine Art Aufnahmewanne bzw. Aufnahmebehälter aus, der auch zum Auffangen von verschütteten oder überkochenden Substanzen dient und dadurch verhindert, dass diese Substanzen in Kontakt mit der Gehäusehülle bzw. der Rahmeneinrichtung 6 gelangen.

Die Wandungseinrichtung 26 und die Rahmeneinrichtung 6 sind derart zueinander ausgerichtet und angeordnet, dass sich in einem Bereich zwischen der Wandungseinrichtung 26 und der Rahmeneinrichtung 6 ein Schlitz 10 ausbildet. Der Schlitz 10 verbindet dabei einen Lufteinlass, der auf einer ersten Seite 12 der Rahmeneinrichtung 6 angeordnet, ist mit einem Luftauslass, der auf einer zweiten Seite 14 der Rahmeneinrichtung 6 angeordnet ist. Bevorzugt ist der Lufteinlass im Bereich des Bodens der Heizhaubenvorrichtung 1, insbesondere auf der Unterseite der Heizhaubenvorrichtung 1 ausgebildet. Die Rahmeneinrichtung 6 ist hierbei bevorzugt trichterförmig ausgebildet und stützt zumindest indirekt und bevorzugt direkt die Wandungseinrichtung 26 und/oder die Heizeinrichtung 8 und/oder das Haltemittel 25 ab. Durch den Schlitz 10 und die Abwärme entsteht bevorzugt ein Kamineffekt, durch den kalte Luft über den Lufteinlass eingesaugt wird. Die eingesaugte Luft wird durch den Schlitz 10 bewegt und über den Luftauslass aus der Heizhaubenvorrichtung 1 herausgefördert. Die Luft bildet dabei eine Isolationsschicht, durch welche ein Wärmeübergang der Wärme der Heizeinrichtung 8 auf die Rahmeneinrichtung 6 zumindest begrenzt oder reduziert wird. Ferner bewirkt die durch die Heizhaubenvorrichtung 1, insbesondere durch den Schlitz 10, geförderte Luft, dass Wärme von der Wandungseinrichtung 26 aufgenommen und aus der Heizhaubenvorrichtung 1 herausgefördert wird. Der Schlitz 10 ist hierbei auf der Oberseite zumindest teilweise durch eine Abdeckung 36 überlagert. Die Abdeckung 36 weist bevorzugt eine Vielzahl an Löcher bzw. Öffnungen auf, insbesondere mehr als 5, 10, 15 oder mehr als 20 Löcher bzw. Öffnungen, durch welche die Luft aus der Heizhaubenvorrichtung 1 herausgeführt wird. Die Abdeckung 36 ist bevorzugt demontierbar ausgebildet. Bevorzugt dient die Abdeckung 36 zum Abdecken von Übergängen zwischen einzelnen Einrichtungen, Aufnahmeeinrichtung/en, Fixierungseinrichtung/en und/oder Verbindungen zwischen Bauteilen, Elementen und/oder Einrichtungen. An der Abdeckung 36 ist bevorzugt die Abdeckschicht 24 angeordnet, insbesondere lösbar oder unlösbar angeordnet. Der erste Isolatoranteil 33 und der zweite Isolatoranteil 34 der einzelnen keramischen Isolatoren, die mit dem Haltemittel 25 in Kontakt stehen, schaffen eine thermische Trennung zwischen dem Haltemittel 25 und der Aufhängeeinrichtung 32. Durch die thermische Trennung wird ein Wärmeübergang vom Haltemittel 25 auf die Rahmeneinrichtung 6 verhindert bzw. zumindest reduziert. Die Aufhängeeinrichtung 32 koppelt bevorzugt das Haltemittel 25 mit der Rahmeneinrichtung 6. Die Aufhängeeinrichtung 32 weist bevorzugt an einem Ende bzw. im Bereich eines Endes die Isolatoranteile 33 und 34 auf. Ferner weist die Aufhängeeinrichtung 32 bevorzugt an einem weiteren Ende eine weitere Isolatoreinrichtung, insbesondere einen Schlitzisolator 31 auf. Die weitere Isolatoreinrichtung ist bevorzugt im gezeigten Anwendungsfall im Schlitz 10 angeordnet und bildet eine thermische Trennung zwischen der Aufhängeeinrichtung 32 und der Rahmeneinrichtung 6 aus. Bevorzugt besteht die weitere Isolatoreinrichtung bzw. der Schlitzisolator 31 zumindest teilweise und bevorzugt vollständig aus Polyetheretherketon (PEEK).

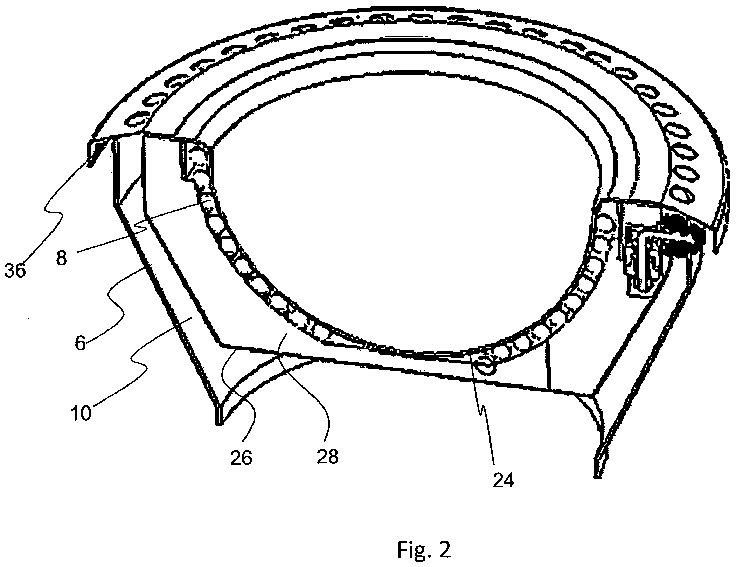

Fig. 2 zeigt eine perspektivische Ansicht der in Fig. 1 gezeigten Heizhaubenvorrichtung 1. Die Heizeinrichtung 8 der Heizhabenvorrichtung 1 ist bevorzugt als rohrförmiges Mineralheizelement ausgebildet. Die Bauart der Heizeinrichtung 8 verhindert insbesondere einen Fluideintritt und bietet aufgrund ihrer Bauart ferner einen Schutz des Heizwiderstandes vor überlaufenden Flüssigkeiten. Ein signifikanter Vorteil der Heizeinrichtung 8 ist, dass darin ein gewelltes bzw. mäanderförmiges oder aufgewickeltes bzw. teilweise oder zumindest teilweise gewelltes, mäanderförmiges oder aufgewickeltes Heizelement verwendet werden kann. Das Heizelement wird dabei bevorzugt durch Abstandselemente 33, 34, insbesondere durch keramische Abstandselemente, von der Innenwand des Rohres beabstandet. Die Abstandselemente 33, 34 können hierbei z.B. aus Magnesiumoxid und/oder Siliziumdioxid bestehen oder Magnesiumoxid und/oder Siliziumdioxid aufweisen. Ferner ist das Rohr bevorzugt zumindest teilweise und besonders bevorzugt volumenmäßig mehrheitlich oder vollständig mit einem Füllmaterial, insbesondere mit Siliziumdioxid, befüllt. Durch das Füllmaterial wird bevorzugt eine Isolation zwischen der Rohrinnenwand und dem Heizelement geschaffen. Ein wärmeleitendes metallisches Rohr mit einem Innendurchmesser zwischen 2 mm und 30 mm, insbesondere zwischen 3 mm und 20 mm, insbesondere zwischen 3 mm und 15 mm, wie z.B. 4 mm, 5 mm, 6 mm, 7 mm, 8 mm, 9 mm, 10 mm, 11 mm, 12 mm, 13 mm oder 14 mm, schützt somit bevorzugt das Heizelement, indem besonders bevorzugt eine vollständig geschlossene Isolierung des Heizelements geschaffen ist. Das Heizelement ist somit derart vor Flüssigkeit geschützt, dass keine überlaufende oder überkochende Substanz mit dem Heizelement, insbesondere dem Heizwiderstand, in Kontakt kommen kann. Die verwendete Heizeinrichtung 8 ermöglicht es aufgrund der beschriebenen Bauform eine Heizhaubenvorrichtung 1 bereitzustellen, die ohne eine spezifische Schaltungsschutzeinrichtung in der Versorgungsleitung vor dem Stromeintritt in das Gerät betreibbar ist. Somit erstreckt sich im Inneren der rohrförmigen Heizeinrichtung 8 zumindest abschnittsweise ein Heizelement, insbesondere ein elektrischer Heizwiderstand, wobei das Heizelement mittels eines Füllmaterials, insbesondere Siliziumdioxid oder Magnesiumoxid, und/oder mittels Abstandselementen von der die rohrförmige Gestalt ausbildenden Wandung der Heizeinrichtung 8 beabstandet ist.

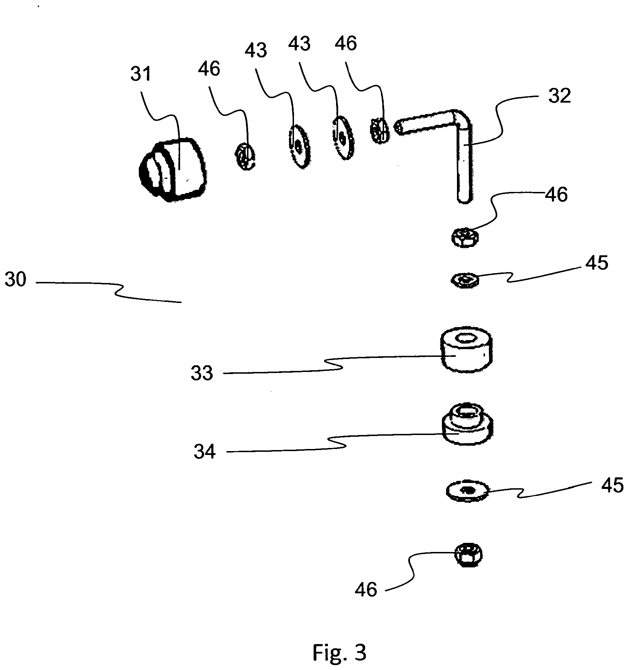

In Fig. 3 ist eine als Aufhängeeinrichtung 32 ausgeführte Kopplungseinrichtung 30 gezeigt. Die Aufhängeeinrichtung 32 weist dabei bevorzugt im horizontalen Teil den Schlitzisolator 31, zwei Scheiben 43 und zwei Muttern 46 auf. Mittels der Muttern 46 sind die Scheiben 43 bevorzugt derart zueinander positionierbar, dass sich ein Kraftschluss mit einer weiteren Einrichtung, insbesondere der Wandungseinrichtung 26 (vgl. Fig. 1), ergibt. Im vertikalen Anteil der Aufhängeeinrichtung 32 sind bevorzugt ein erster Isolatoranteil 33 und ein zweiter Isolatoranteil 34 angeordnet, wobei die Isolatoranteile 33 und 34 bevorzugt mittels Scheiben 45 und Muttern 46 zueinander positionierbar sind. Bevorzugt werden die Isolatoranteile 33 und 34 derart zueinander positioniert, dass sie eine weitere Einrichtung, insbesondere das Haltemittel 25, fixieren, insbesondere festklemmen. Der Aufbau der Aufhängeeinrichtung 32 bewirkt, dass die Hitze im Bereich der Heizeinrichtung 8 nicht infolge von Wärmeleitung bzw. reduziert auf ein die Rahmeneinrichtung 6 umgebendes Gehäuse 44 (vgl. Fig. 5) übergeht. Zunächst bewirken die bevorzugt keramischen Isolatoren 33, 34, dass die Wärme nicht bzw. reduziert vom Haltemittel 25 auf die Aufnahmeeinrichtung 32 übergeht. Ferner bewirkt der Schlitzisolator 31, dass die Wärme von der Aufnahmeeinrichtung 32 nicht bzw. reduziert auf die Rahmeneinrichtung 6 übergeht.

Fig. 4 zeigt eine Explosionsdarstellung einer erfindungsgemäßen Heizhaubenvorrichtung 1. Es ist dabei ersichtlich, dass die Heizeinrichtung 6 zwischen bevorzugt drei und besonders bevorzugt gleichmäßig in Umfangsrichtung verteilt angeordneten Markierungen des Haltemittels 25 angeordnet wird, eine Fixierung ist hierbei bevorzugt nicht erforderlich. Bevorzugt sind drei Isolatoren, insbesondere aus keramischen Material oder keramisches Material aufweisend, in drei Anbringungseinrichtungen um das Haltemittel 25 herum angeordnet. Bevorzugt ist jeweils eine Aufhängeeinrichtung 32 in jedem keramischen Isolator angeordnet und gleichmäßig in Umfangsrichtung des Haltemittels 25 angeordnet. Bevorzugt sind die Aufhängeeinrichtungen 32 über Muttern, insbesondere M2 oder M3 oder M4 oder M5 oder M6, mit dem Isolator verbunden. Bevorzugt wird die Heizeinrichtung 8 durch eine bevorzugt vorgefertigte und besonders bevorzugt vorgeformte Dämmungseinrichtung 28, insbesondere eine Glasfasermatte aus Glasfasermaterial, überlagert. Die Dämmungseinrichtung 28 wird ihrerseits bevorzugt von der Wandungseinrichtung 26 überlagert. Die Wandungseinrichtung 26 besteht bevorzugt aus einem Material oder Materialgemisch, insbesondere zumindest teilweise und bevorzugt massemäßig mehrheitlich und besonders bevorzugt vollständig aus Aluminium. Die Wandungseinrichtung 26 ist bevorzugt in horizontalen Bereichen der einzelnen Aufhängeeinrichtungen 32 zwischen flache Scheiben 43 (vgl. Fig. 3) geklemmt und dadurch gesichert. An dem horizontalen Anteil der Aufhängeeinrichtungen 32 sind im Bereich eines Endes der Aufhängeeinrichtungen 32 oder am Ende der Aufhängeeinrichtungen 32 jeweils ein Isolator, insbesondere der Schlitzisolator 31, angeordnet. Der Isolator besteht hierbei bevorzugt aus Polyetheretherketon. Die im horizontalen Anteil der Aufhängeeinrichtungen 32 jeweils angeordneten Isolatoren, werden in Löcher in der Rahmeneinrichtung 6 angeordnet. Die Abdeckung 36 wird bevorzugt nach dem Verbinden der Aufhängeeinrichtungen 32 mit der Rahmeneinrichtung 6 an der Heizhaubenvorrichtung 1 angebracht. Bevorzugt sind die einzelnen in Fig. 4 gezeigten Teile einzeln austauschbar, wobei auch denkbar ist, dass mehrere der gezeigten Teile als Bauteilgruppe austauschbar sind.

Die Wandungseinrichtung 26 besteht bevorzugt aus einem Metall bzw. Metallblech oder aus einem Metallgemisch bzw. Metallgemischblech besonders bevorzugt besteht die Wandungseinrichtung 26 zumindest teilweise oder bevorzugt massenmäßig mehrheitlich aus Aluminium. Die Rahmeneinrichtung 6 besteht bevorzugt aus einem Metall oder aus einem Metallgemisch besonders bevorzugt besteht die Rahmeneinrichtung 6 zumindest teilweise oder bevorzugt massenmäßig mehrheitlich aus Stahl, insbesondere aus Edelstahl. Die Aufhängeeinrichtung 32 besteht bevorzugt aus einem Metall oder aus einem Metallgemisch besonders bevorzugt besteht die Aufhängeeinrichtung 32 zumindest teilweise oder bevorzugt massenmäßig mehrheitlich aus Stahl, insbesondere aus Edelstahl. Die Abdeckung 36 besteht bevorzugt aus einem Metall oder aus einem Metallgemisch besonders bevorzugt besteht die Abdeckung 36 zumindest teilweise oder bevorzugt massenmäßig mehrheitlich aus Stahl, insbesondere aus Edelstahl.

In Fig. 5 ist die Anordnung aus Fig. 1 gezeigt, wobei die Darstellung um ein Gehäuse 44, eine Halteeinrichtung 38 und ein Objekt 4 ergänzt ist. Die Halteeinrichtung 38 dient hierbei bevorzugt zum definierten Halten des Objekts 4, das bevorzugt ein Kolben, insbesondere ein Glaskolben, sein kann.

Die erfindungsgemäße Heizhaube weist ein multifunktionales Design eines Chemikalien resistenten Gehäuses auf. Der innovative Aufbau der Heizhaube 1 sorgt für einen effizienteren Wärmeaustausch zwischen der Heizeinrichtung 8 und dem Glaskolben, sodass Laborarbeiten schneller und exakter durchgeführt werden können. Weiterhin resultiert im Betrieb der Heizhaube aus der erfindungsgemäßen Gestaltung ein "Kamin-Effekt", wodurch das Gehäuse jederzeit - auch während der Anwendung - von außen berührt werden kann, wodurch sich eine hohe Arbeitssicherheit ergibt. Weiterhin kann die Heizhaube 1 leicht bedient werden und ist sehr leistungsstark. Mittels einer elektromagnetischen Rührkomponente ist ferner eine genaue und kräftige Durchmischung bewirkbar.

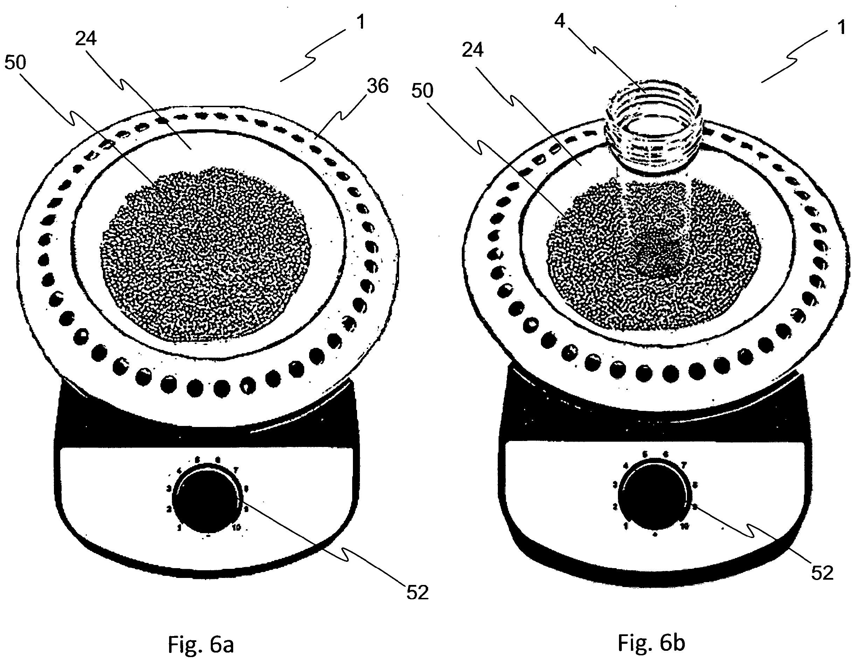

Fig. 6a zeigt eine erfindungsgemäße Heizhaube 1. Die Heizhaube 1 weist eine den Wärmeübertragungsbereich 2 hin zur Heizeinrichtung 8 begrenzende Abdeckschicht 24 auf. Die Abdeckschicht 24 wir hierbei bevorzugt abschnittsweise und bevorzugt vollständig durch ein bevorzugt flexibles Gewebe oder ein bevorzugt flexibles Netz ausgebildet. Die Abdeckschicht 24 wird hierbei bevorzugt oberseitig von einer Abdeckung abschnittsweise überlagert. Ein Schüttgut 50, das bevorzugt aus metallischen Kugel bzw. Stahlkugeln oder Aluminiumkugeln oder auch anderen im wesentlichen kugelförmigem oder würfelförmigem Schüttgut aus Metall besteht, wird gemäß dieser Darstellung in dem Wärmeübertragungsbereich 2 gehalten, insbesondere durch die Abdeckschicht 24. Eine Temperierung des Wärmeübertragungsbereichs 2 bewirkt somit eine Temperierung des Schüttguts.
Das Bezugszeichen 52 kennzeichnet eine optionale Einstelleinrichtung, durch welche bevorzugt die Heizleistung der Heizeinrichtung 8 beeinflusst bzw. geregelt werden kann.
Fig. 6b zeigt gegenüber der Fig. 6a zusätzlich noch ein zu temperierendes Objekt 4, insbesondere ein Reagenzglas oder ein Kolben, der in einem Bereich in dem eine zu temperierende Substanz vorgehalten wird, zumindest abschnittsweise von dem Schüttgut 50 kontaktierend umgeben wird.

**Bezugszeichenliste**

| | |
|---|---|
| 1. Heizhaube | 30. Kopplungseinrichtung |
| 2. Wärmeübertragungsbereich | 31. Schlitzisolator |
| 4. Objekt | 32. Aufhängeeinrichtung |
| 6. Rahmeneinrichtung | 33. erster Isolatoranteil |
| 8. Heizeinrichtung | 34. zweiter Isolatoranteil |
| 10. Schlitz | 36. Abdeckung |
| 12. Erste Seite | 38. Halteeinrichtung |
| 14. Zweite Seite | 40. Magnetelement |
| 16. Zwischenabschnitt | 42. Erdungskabel |
| 18. Frontabschnitt | 43. Scheibe |
| 20. Endabschnitt | 44. Gehäuse |
| 22. Steuerungseinrichtung | 45. Scheibe |
| 24. Abdeckschicht | 46. Mutter |
| 25. Haltemittel | 50. Schüttgut |
| 26. Wandungseinrichtung | 52. Einstellelement |
| 28. Mittel zum thermischen Dämmen | |

## Patentansprüche

1. Heizhaube (1) zum Erhitzen von Substanzen, insbesondere für chemische und/oder pharmazeutische Verfahren,
mindestens umfassend
einen sphärisch ausgebildeten Wärmeübertragungsbereich (2), insbesondere zur Aufnahme von zumindest teilweise kugelförmigen Objekten (4),
eine Rahmeneinrichtung (6), wobei die Position des Wärmeübertragungsbereichs (2) durch die Rahmeneinrichtung (6) zumindest teilweise vorgegeben Wird, und
eine Heizeinrichtung (8),
wobei die Heizeinrichtung (8) zwischen dem Wärmeübertragungsbereich (2) und der Rahmeneinrichtung (6) angeordnet ist,
wobei zwischen der Rahmeneinrichtung (6) und der Heizeinrichtung (8) zumindest abschnittsweise ein Schlitz (10) zum Führen von Luft ausgebildet ist, wobei Luft auf einer ersten Seite (12) der Rahmeneinrichtung (6) in den Schlitz (10) einleitbar ist, wobei die eingeleitete Luft auf einer in Längsrichtung der Rahmeneinrichtung (6) beabstandeten anderen Seite (14) aus dem Schlitz (10) aUsleitbar ist.

2. Heizhaube (1) nach Anspruch 1, **dadurch gekennzeichnet, dass** die Heizeinrichtung (8) zumindest einmal und bevorzugt mehrfach den Wärmeübertragungsbereich (2) in Umfangsrichtung umschließt.

3. Heizhaube (1) nach einem der Ansprüche 1 bis 2,
**dadurch gekennzeichnet, dass**
sich im Inneren der rohrförmigen Heizeinrichtung (8) zumindest abschnittsweise ein Heizelement, insbesondere ein elektrischer Heizwiderstand, erstreckt,
wobei das elektrische Heizelement mittels eines Füllmaterials, insbesondere Siliziumdioxid oder Magnesiumoxid, und/oder mittels Abstandselementen von der die rohrförmige Gestalt ausbildenden Wandung der Heizeinrichtung (8) beabstandet ist.

4. Heizhaube (1) nach einem der vorangegangenen Ansprüche,
**dadurch gekennzeichnet, dass**
sich der elektrische Heizwiderstand in einem Zwischenabschnitt (16) zwischen einem Frontabschnitt (18) und einem Endabschnitt (20) der rohrförmigen Heizeinrichtung (8) erstreckt, wobei der Endabschnitt (20) und/oder der Frontabschnitt (18) derart gestaltet sind, dass in einem Betriebszustand, in dem der elektrische Heizwiderstand (8) mit Strom beaufschlagt wird, die durchschnittliche Oberflächentemperatur der rohrförmigen Heizeinrichtung (8) im Zwischenabschnitt (16) größer ist als die durchschnittliche Oberflächentemperatur der rohrförmigen Einrichtung im Frontabschnitt (18) und/oder im Endabschnitt (20).

5. Heizhaube (1) nach einem der vorangegangenen Ansprüche,
**dadurch gekennzeichnet, dass**
die Heizeinrichtung (8) mit einer manuell betätigbaren Steuerungseinrichtung (22) gekoppelt ist.

6. Heizhaube (1) nach einem der vorangegangenen Ansprüche,
**dadurch gekennzeichnet, dass**
die rohrförmige Heizeinrichtung (8) von einer den Wärmeübertragungsbereich (2) zumindest abschnittsweise auskleidenden Abdeckschicht (24) überlagert wird, wobei die Abdeckschicht (24) bevorzugt zumindest teilweise aus Glasfasern besteht.

7. Heizhaube (1) nach einem der vorangegangenen Ansprüche,
**dadurch gekennzeichnet, dass**
die rohrförmige Heizeinrichtung (8) durch eine mit der Rahmeneinrichtung (6) gekoppelte Wandungseinrichtung (26) in Umfangsrichtung umschlossen wird, wobei zwischen der Wandungseinrichtung (26) und der rohrförmigen Heizeinrichtung (8) bevorzugt ein Mittel zum thermischen Dämmen (28) vorgesehen ist.

8. Heizhaube (1) nach einem der vorangegangenen Ansprüche,
**dadurch gekennzeichnet, dass**
die Wandungseinrichtung (26) und die Rahmeneinrichtung (6) mittels mehrerer zumindest abschnittsweise thermisch isolierter Kopplungseinrichtungen (30) miteinander verbunden sind,
wobei zwischen der Wandungseinrichtung (26) und der Rahmeneinrichtung (6) zumindest abschnittsweise ein Schlitz (10) zum Führen von Luft ausgebildet ist, wobei Luft auf einer ersten Seite (12) der Rahmeneinrichtung (6) in den Schlitz (10) einleitbar ist, wobei die eingeleitete Luft auf einer in Längsrichtung der Rahmeneinrichtung (6) beabstandeten zweiten Seite (14) aus dem Schlitz (10) ausleitbar ist.

9. Heizhaube (1) nach einem der vorangegangenen Ansprüche,
**dadurch gekennzeichnet, dass**
die zumindest abschnittsweise thermische Isolierung der Kopplungseinrichtungen (30) derart im Bereich des Schlitzes (10) angeordnet ist, um eine Wärmeleitungsbarriere zwischen der Rahmeneinrichtung (6) und der Wandungseinrichtung (26) auszubilden.

10. Heizhaube (1) nach einem der vorangegangenen Ansprüche,
**dadurch gekennzeichnet, dass**
Im Wärmeübertragungsbereich (2), Insbesondere auf der Abdeckschicht (24), Schüttgut (50) angeordnet ist, das durch Schüttgutkörner gebildet wird, wobei das Schüttgut (50) infolge einer mechanischen Belastung umpositionierbar ist.

11. Heizhaube (1) nach Anspruch 10,
**dadurch gekennzeichnet, dass**
die Schüttgutkörner des Schüttguts (50) mehrheitlich und bevorzugt alle Schüttgutkörner aus Metall bestehen, wobei die Schüttgutkörner aus dem gleichen Material oder aus unterschiedlichen Materialien bestehen.

12. Heizhaube (1) nach Anspruch 11,
**dadurch gekennzeichnet, dass**
die Schüttgutkörner aus metallischem Material bestehen, das eine Wärmeleitfähigkeit von mehr als 10 W/(m*K), insbesondere von mehr als 30 W/(m*K) oder von mehr als 50 W/(m*K) oder von mehr als 80 W/(m*K) oder von mehr als 109 W/(m*K) oder von mehr als 119 W/(m*K) oder von mehr als 150 W/(m*K) oder von mehr als 200 W/(m*K) oder von mehr als 230 W/(m*K) oder von mehr als 350 W/(m*K) oder von mehr als 400 W/(m*K) oder von mehr als 420 W/(m*K), aufweist, bevorzugt besteht das metallische Material aus einem der Metalle Eisen, Zink, Messing, Aluminium, Gold, Kupfer und/oder Silber oder weist eines oder mehrere dieser Metalle auf.

13. Heizhaube (1) nach Anspruch 10 oder 11,
**dadurch gekennzeichnet, dass**
die Mehrzahl der Schüttgutkörner und bevorzugt alle Schüttgutkörner eine zumindest teilweise sphärische Form, insbesondere eine kugelartige Form, aufweisen, wobei der Durchmesser der Mehrzahl der Schüttgutkörner und bevorzugt aller Schüttgutkörner bevorzugt kleiner als 6mm, Insbesondere kleiner als 5mm oder kleiner als 4mm oder kleiner als 3mm oder kleiner als 2mm oder kleiner als 1mm, ist.

14. Verfahren zum Betreiben einer Heizhaube (1) gemäß einem der vorangegangenen Ansprüche,
mindestens umfassend die Schritte:
Bereitstellen einer Heizhaube (1),
Einbringen von Schüttgut (50) In den Wärmeübertragungsbereich (2) der Heizhaube (1),
Positionieren eines zu temperierenden Objekts (4) gegenüber der Heizhaube (1), wobei das Objekt und das Schüttgut (50) in Kontakt gebracht werden,
Temperieren des Schüttguts (50) durch die Heizhaube (1) und Temperieren des zu temperierenden Objekts (4) mittels des temperierten Schüttguts (50).

## Claims

1. Heating hood (1) for heating substances, in particular for chemical and/or pharmaceutical processes,
at least comprising
a spherically designed heat transfer area (2), in particular for receiving at least partially spherical objects (4),
a frame device (6) wherein the position of the heat transfer area (2) is at least partly predefined by the frame device (6) and
a heating device (8),
wherein the heating device (8) is arranged between the heat transfer area (2) and the frame device (6),
wherein formed between the frame device (6) and the heating device (8) at least in parts is a slit (10) for channelling air, wherein air can be introduced on a first side (12) of the frame device (6) into the slit (10), wherein the introduced air can be channelled out of the slit (10) on a further side (14) located at distance in a longitudinal direction of the frame device (6).

2. Heating hood (1) according to claim 1
**characterised in that** the heating device (8) surrounds the heat transfer area (2) at least once and preferably multiple time in the circumferential direction.

3. Heating hood (1) according to any one claims 1 to 2 **characterised in that**
in the interior of the tubular heating device (8) a heating element, in particular an electrical heating resistor, extends, at least in parts,
wherein the electrical heating element is spaced from the wall of the heating device (8) forming the tubular structure by means a filler material, in particular silicon dioxide or magnesium oxide and/or by means of spacer elements.

4. Heating hood (1) according to any one of the preceding claims
**characterised in that**
the electrical heating element extends in an intermediate section (16) between a front section (18) and an end section (20) of the tubular heating device (8), wherein the end section (20) and/or the front section (18) are designed in such a way that in an operating state, in which a current is applied to the electrical heating resistor (8) the average surface temperature of the tubular heating device (8) in the intermediate section (16) is greater than the average surface temperature of the tubular heating device in the front section (18) and/or in the end section (20).

5. Heating hood (1) according to any one of the preceding claims
**characterised in that**
the heating device (8) is connected to a manually operable control device (22).

6. Heating hood (1) according to any one of the preceding claims
**characterised in that**
the tubular heating device (8) is covered by a cover layer (24) lining the heat transfer area (2) at least in parts, wherein the cover layer (24) preferably at least partly consists of glass fibres.

7. Heating hood (1) according to any one of the preceding claims
**characterised in that**
the tubular heating device (8) is surrounded in the circumferential direction by a wall device (26) connected to the frame device (6), wherein between the wall device (26) and the tubular heating device (8) a means of thermal insulation (28) is preferably provided.

8. Heating hood (1) according to any one of the preceding claims
**characterised in that**
the wall device (26) and the frame device (6) are connected to each other by means of several, at least in parts, thermally insulated connection devices (30), wherein between the wall device (26) and the frame device (6), at least in parts, a slit (10) for channelling air is formed, wherein air can be introduced on a first side (12) of the frame device (6) into the slit (10), wherein the introduced air can be channelled out of the slit (10) on a further side (14) located at distance in a longitudinal direction of the frame device (6).

9. Heating hood (1) according to any one of the preceding claims
**characterised in that**
the thermal insulation, at least in parts, of the connection devices (30) is arranged in the area of the slit (10) in such a way as to form a heat transfer barrier between the frame device (6) and the wall device (26).

10. Heating hood (1) according to any one of the preceding claims
**characterised in that**
in the heat transfer area (2), in particular on the cover layer (24), bulk material (50) is arranged which is formed of bulk material granules, wherein the bulk material (50) is repositionable as a result of mechanical stressing.

11. Heating hood (1) according to claim 10 **characterised in that**
the majority, and preferably all of the bulk material granules of the bulk material (50) are made of metal, wherein the bulk material granules consist of the same material or of different materials.

12. Heating hood (1) according to claim 11 **characterised in that**
the bulk material granules consist of metallic material, that has a thermal conductivity of more than 10 W/(m*K), in particular of more than 30 W/(m*K) or of more than 50 W/ (m*K) or of more than 80/W (m*K) or of more than 109 W/(m*K) or of more than 119 W/(m*K) or of more than 150 W/(m*K) or of more than 200 W/(m*K) or of more than 230 W/(m*K) or of more than 350 W/(m*K) or of more than 400 W/(m*K) or of more than 420 W/(m*K), preferably the metallic materials consists of one of the metals iron, zinc, brass, aluminium, gold, copper and/or silver or contains one or more of these metals.

13. Heating hood (1) according to claim 10 or 11 **characterised in that**
the majority, and preferably all of the bulk material granules are of an at least partly spherical shape, in particular a globe-like shape, wherein the diameter of the majority, and preferably of all of the bulk material granules is preferably less than 6 mm, in particular less than 5 mm or less than 4 mm or less than 3 mm or less than 2 mm or less than 1 mm.

14. Method of operating a heating hood (1) according to any one of the preceding claims
at least comprising the steps:
providing a heating hood (1),
introducing bulk material (50) into the heat transfer area (2) of the heating hood (1),
positioning an object (4) to be tempered opposite the heating hood (1), wherein the object and the bulk material (50) are brought into contact with each other,
tempering the bulk material (50) by way of the heating hood (1) and tempering of the object (4) to be tempered by means of the tempered bulk material (50).

## Revendications

1. Chauffe-ballons (1), destiné à chauffer des substances, notamment pour des procédés chimiques et/ou pharmaceutiques, comprenant au moins
une zone de transfert thermique (2) conçue sous forme sphérique, destinée à recevoir notamment des objets (4) au moins en partie en forme de billes,
un système formant cadre (6), la position de la zone de transfert thermique (2) étant prédéfinie au moins en partie par le système formant cadre (6) et
un système de chauffage (8),
le système de chauffage (8) étant placé entre la zone de transfert thermique (2) et le système formant cadre (6),
entre le système formant cadre (6) et le système de chauffage (8) étant conçue au moins par endroits une encoche (10) destinée à guider de l'air, de l'air pouvant être introduit dans l'encoche (10) sur un premier côté (12) du système formant cadre (6), l'air introduit pouvant être évacué hors de l'encoche (10) sur un autre côté (14) écarté dans la direction longitudinale du système formant cadre (6).

2. Chauffe-ballons (1) selon la revendication 1, **caractérisé en ce que** le système de chauffage (8) entoure au moins une fois et de préférence de façon multiple la zone de transfert thermique (2) dans la direction périphérique.

3. Chauffe-ballons (1) selon l'une quelconque des revendications précédentes, **caractérisé en ce qu'**à l'intérieur du système de chauffage (8) de forme tubulaire s'étend au moins par endroits un élément chauffant, notamment une résistance électrique chauffante, l'élément électrique chauffant étant écarté au moyen d'au moins une matière de charge, notamment de dioxyde de silicium ou d'oxyde de magnésium et/ou d'éléments écarteurs de la paroi du système de chauffage (8) qui crée la conformation de forme tubulaire.

4. Chauffe-ballons (1) selon l'une quelconque des revendications précédentes, **caractérisé en ce que** la résistance électrique chauffante s'étend dans un segment intermédiaire (16) entre un segment frontal (18) et un segment d'extrémité (20) du système de chauffage (8) de forme tubulaire, le segment d'extrémité (20) et/ou le segment frontal (18) étant conçu de telle sorte que dans un état de service dans lequel la résistance électrique chauffante (8) est soumise à du courant, la température superficielle moyenne du système de chauffage (8) de forme tubulaire dans le segment intermédiaire (16) soit supérieure à la température superficielle moyenne du système de forme tubulaire dans le segment frontal (18) et/ou dans le segment d'extrémité (20).

5. Chauffe-ballons (1) selon l'une quelconque des revendications précédentes, **caractérisé en ce que** le système de chauffage (8) est couplé avec un système de commande (22) à manoeuvre manuelle.

6. Chauffe-ballons (1) selon l'une quelconque des revendications précédentes, **caractérisé en ce qu'**au système de chauffage (8) de forme tubulaire se superpose une couche de couverture (24) habillant au moins par endroits la zone de transfert thermique (2), la couche de couverture (24) étant constituée au moins partiellement en fibres de verre.

7. Chauffe-ballons (1) selon l'une quelconque des revendications précédentes, **caractérisé en ce que** le système de chauffage (8) de forme tubulaire est entouré d'un système formant paroi (26) couplé avec le système formant cadre (6), entre le système formant paroi 26) et le système de chauffage (8) de forme tubulaire étant prévu de préférence un moyen d'isolation thermique (28) .

8. Chauffe-ballons (1) selon l'une quelconque des revendications précédentes, **caractérisé en ce que** le système formant paroi (26) et le système formant cadre (6) sont reliés l'un à l'autre au moyen de plusieurs systèmes de couplage (30) thermiquement isolés au moins par endroits,
entre le système formant paroi (26) et le système formant cadre (6) étant réalisée au moins par endroits une encoche (10) destinée au guidage d'air, l'air pouvant être introduit dans l'encoche (10) sur un premier côté (12) du système formant cadre (6), l'air introduit pouvant être évacué hors de l'encoche (10) sur un deuxième côté (14) écarté dans la direction longitudinale du système formant cadre (6).

9. Chauffe-ballons (1) selon l'une quelconque des revendications précédentes, **caractérisé en ce que** l'isolation thermique au moins par endroits des systèmes de couplage (30) est placée dans la région de l'encoche (10), de sorte à créer une barrière de guidage thermique entre le système formant cadre (6) et le système formant paroi (26).

10. Chauffe-ballons (1) selon l'une quelconque des revendications précédentes, **caractérisé en ce que** dans la zone de transfert thermique (2), notamment sur la couche de couverture (24) est placée de la matière en vrac (50) qui est formée de grains de matière en vrac, la matière en vrac (50) pouvant être repositionnée à la suite d'une contrainte mécanique.

11. Chauffe-ballons (1) selon la revendication 10, **caractérisé en ce que** les grains de matière en vrac de la matière en vrac (50) sont majoritairement et de préférence en totalité en métal, les grains de matière en vrac étant composé de la même matière ou dans différentes matières.

12. Chauffe-ballons (1) selon la revendication 11, **caractérisé en ce que** les grains de matière en vrac sont composés de matière métallique qui fait preuve d'une conductivité thermique supérieure à 10 W(m*K), notamment supérieure à 30 W(m*K), ou supérieure à 50 W(m*K), ou supérieure à 80 W(m*K), ou supérieure à 109 W(m*K), ou supérieure à 119 W(m*K), ou supérieure à 150 W(m*K), ou supérieure à 200 W(m*K), ou supérieure à 230 W(m*K), ou supérieure à 350 W(m*K), ou supérieure à 400 W(m*K), ou supérieure à 420 W(m*K), la matière métallique est composée de préférence de l'un des métaux fer, zinc, laiton, aluminium, or, cuivre et/ou argent et ou comporte un ou plusieurs de ces métaux.

13. Chauffe-ballons (1) selon la revendication 10 ou 11, **caractérisé en ce que** la majorité des grains de matière en vrac et de préférence tous les grains de matière en vrac présentent une forme au moins partiellement sphérique, notamment une forme de bille, le diamètre de la majorité des grains de matière en vrac et de préférence de tous les grains de matière en vrac étant de préférence inférieur à 6 mm, notamment inférieur à 5 mm ou inférieur à 4 mm ou inférieur à 3 mm ou inférieur à 2 mm ou inférieur à 1 mm.

14. Procédé, destiné à faire fonctionner un chauffe-ballons (1) selon l'une quelconque des revendications précédentes, comprenant au moins les étapes consistant à :
mettre à disposition un chauffe-ballons (1),
introduire de la matière en vrac (50) dans la zone de transfert thermique (2) du chauffe-ballons (1),
positionner un objet (4) à tempérer en regard du chauffe-ballons (1), l'objet et la matière en vrac (50) étant amenés en contact,
mettre en température la matière en vrac (50) à l'aide du chauffe-ballons (1) et mettre en température l'objet (4), au moyen de la matière en vrac (50) tempérée.
